(19) Europäisches Patentamt
European Patent Office
Office européen des brevets

(11) Veröffentlichungsnummer: **0 179 267**
**B1**

# (12) EUROPÄISCHE PATENTSCHRIFT

(45) Veröffentlichungstag der Patentschrift: **19.07.89**

(51) Int. Cl.[4]: **C 08 J 7/04**, C 09 D 3/74, C 09 D 7/12

(21) Anmeldenummer: **85111667.3**

(22) Anmeldetag: **14.09.85**

## (54) Verfahren zur Verringerung der Permeation von blasgeformten Hohlkörpern aus thermoplastischen Kunststoffen.

(30) Priorität: **19.09.84 DE 3434317**

(43) Veröffentlichungstag der Anmeldung: **30.04.86 Patentblatt 86/18**

(45) Bekanntmachung des Hinweises auf die Patenterteilung: **19.07.89 Patentblatt 89/29**

(84) Benannte Vertragsstaaten: **BE DE FR GB IT NL SE**

(56) Entgegenhaltungen:
**EP-A- 0 005 167**
**US-A- 4 210 565**
**RESEARCH DISCLOSURE, Band 129, Januar 1975, Seite 9, Nr. 12908, Industrial Opportunities Ltd., Homewell, Havant, GB; "High nitrile polymer coatings"**

(73) Patentinhaber: **BASF Aktiengesellschaft**
**Carl-Bosch-Strasse 38**
**D-6700 Ludwigshafen (DE)**

(72) Erfinder: **Pfirrmann, Guenther, Dr.**
**Osloer Weg 38**
**D-6700 Ludwigshafen (DE)**
Erfinder: **Kast, Hans, Dr.**
**Kantstrasse 1**
**D-6800 Mannheim 1 (DE)**
Erfinder: **Schwiegk, Lothar, Dr.**
**Zwingenberger Strasse 13**
**D-6806 Viernheim (DE)**
Erfinder: **Brandstetter, Franz, Dr.**
**Ritterbueschel 45**
**D-6730 Neustadt (DE)**

**EP 0 179 267 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur Verringerung der Permeation von blasgeformten Hohlkörpern aus thermoplastischen Kunststoffen, insbesondere aus hochmolekularem HDPE, bei dem die Hohlkörperoberflächen mittels einer Gasflamme abgeflammt oder der Einwirkung einer elektrischen Entladung in einer gasförmigen Atmosphäre unterworfen und nachträglich in einem besonderen Arbeitsgang mit einer Beschichtungsmasse, die ein Copolymerisat aus 20 bis 80 Gew.-% Acrylnitril und 80 bis 20 Gew.-% anderen polymerisierbaren Monomeren enthält, überzogen werden.

Blasgeformte Hohlkörper werden in großem Umfang aus Polyethylen, insbesondere aus hochmolekularem HDPE, hergestellt, da dieser Kunststoff hinsichtlich seiner Widerstandsfähigkeit gegen chemische Einwirkungen, seiner Stoßfestigkeit, seiner Verformbarkeit bei niedrigen Temperaturen und auch hinsichtlich seiner Undurchlässigkeit für Wasserdampf ausgezeichnete Eigenschaften besitzt. Dagegen sind Hohlkörper aus Polyethylen wenig widerstandsfähig gegen den Durchtritt von bestimmten Flüssigkeiten, Gasen oder Dämpfen, beispielsweise Kohlenwasserstoffen, so daß der im Hohlkörper befindliche Stoff, normalerweise eine Flüssigkeit, durch Diffusion von innen in seiner Beschaffenheit oder Menge verändert werden kann.

Um Kunststoffbehälter zur Aufbewahrung einer Vielzahl verschiedener Stoffe verwendbar zu machen, bildet man ihre Wandungen daher mehrschichtig aus. Bei der Herstellung solcher Behälter treten nun große Schwierigkeiten dadurch auf, daß die einzelnen Schichten nicht oder nur wenig aneinander haften. Die geringe Haftfähigkeit beruht darauf, daß Polyolefin nicht polar ist und gegenüber zahlreichen Beschichtungsmassen nur eine geringe Verträglichkeit besitzt. Zur Verbesserung der Haftung ist es bereits bekannt, die Beschichtungsmasse, d. h. Sperrschicht, über eine Zwischenschicht als Haftvermittler mit den Hohlkörperoberflächen zu verbinden. Nachteilig hierbei ist jedoch, daß die Herstellung solcher mehrschichtig aufgebauten Hohlkörper nach dem Blasformverfahren technisch aufwendig ist, da mehrere Extruder sowie ein spezieller Strangpreßkopf benötigt werden. Zudem besitzen diese Hohlkörper häufig mechanische Schwächen, vor allem im Quetschnahtbereich. Schließlich können die beim Blasformen zwangsläufig anfallenden Abfälle, wie Randabschnitte und Butzen, wenn überhaupt, nur bedingt wiederverwendet werden.

Zur Darstellung der Erfindung-Gattung ist im Oberbegriff des Anspruchs 1 von einem bekannten Verfahren im Sinne des Artikels 12 908 der Zeitschrift « Research Disclosure », 129 (Januar 1975), Seite 9 ausgegangen, bei dem zur Verringerung der Permeation von Kunststoffbehältern eine Beschichtung der Behälter mit einem Acrylnitril-haltigen Copolymeren vorgeschlagen wird. Dabei werden die Behälter zunächst mittels einer Gasflamme abgeflammt oder der Einwirkung einer elektrischen Entladung in einer gasförmigen Atmosphäre unterworfen. Für das anschließende Aufbringen der Beschichtung ist jedoch die Verwendung brennbarer und toxischer organischer Lösungsmittel erforderlich. Darüber hinaus ist die Haftung der Beschichtung, auf dem Behälter unter Praxisbedingungen nicht zufriedenstellend.

Mit der Erfindung soll eine Möglichkeit geschaffen werden, die Permeation von blasgeformten Hohlkörpern gegenüber der Einwirkung von Kohlenwasserstoffen, Vergaserkraftstoffbestandteilen, wie z. B. aliphatischen und aromatischen Kohlenwasserstoffen sowie Alkoholen mit unterschiedlichem Kohlenstoffgehalt,. auch bei erhöhten Temperaturen, zu verringern und gleichzeitig die Haftkraft zwischen den Hohlkörperwandungen und der Beschichtung zu erhöhen, ohne daß sich die physikalischen und chemischen Eigenschaften des Hohlkörpers verschlechtern.

Zur Lösung dieser Aufgabe werden die Maßnahmen nach dem Kennzeichen des Anspruchs 1 vorgeschlagen.

Wäßrige Polymerdispersionen für die Verwendung beim erfindungsgemäßen Verfahren können in an sich üblicher Weise durch Copolymerisation der Monomeren in wäßriger Emulsion unter Verwendung der üblichen Emulgier- und Dispergierhilfsmittel hergestellt sein und haben eine Konzentration an Copolymerisat von 30 bis 70 Gew.-%. Als Emulgier- und Dispergierhilfsmittel enthalten sie meist 0,2 bis 3 Gew.-%, bezogen auf die Menge des Copolymerisats anionische oder kationische und/oder nichtionische Emulgatoren, wie Natriumdialkylsulfosuccinate, Natriumsalze von sulfatierten Ölen, Natriumsalze von Alkylsulfonsäuren, Natrium-, Kalium- und Ammoniumalkylsulfate, Alkalisalze von Sulfonsäure, Alkalisalze von sulfatierten oxalkylierten $C_{12}$- bis $C_{24}$-Fettalkoholen und Alkylphenolen sowie Polyadditionsprodukte von Alkylenoxiden, wie besonders Ethylenoxid und/oder Propylenoxid an Fettsäuren, Fettalkohole, Fettamide und/oder Alkylphenole, ferner Natriumsalze von Fettsäuren, wie Natriumstearat und Natriumoleat und quartäre Stickstoffverbindungen wie z. B. Alkylammonium-, Alkylarylammonium- oder Alkylpyridiniumhalogenide.

Die Copolymerisate enthalten als Comonomere 20 bis 80, vorzugsweise 30 bis 60 Gew.-% Acrylnitril sowie 20 bis 80 Gew.-% andere polymerisierbare Monomere wie Acryl- und/oder Methacrylsäureester von 1 bis 8 C-Atomen enthaltenden Alkanolen, Vinylester von 2 bis 4 C-Atomen enthaltenden Carbonsäuren, Styrol und dessen alkylsubstituierte Derivate, Vinylchlorid und Vinylidenchlorid. Außerdem können als Comonomere bis zu 5 Gew.-% vernetzende Monomere wie z. B. Acrylsäureester von Diolen oder Triolen oder Divinylverbindungen wie Divinylbenzol Verwendung finden. Häufig enthalten derartige Copolymere noch 0,5 bis 7 Gew.-% funktioneller Monomerer wie Acrylsäure, Methacrylsäure, Maleinsäure, Acrylamid, Methacrylamid, N-Methylacrylamid, N-Isobutylacrylamid, N-Methylmethacrylamid, N-Methylolacrylamid,

N-Methylolmethacrylamid, N-Ethoxymethylacrylamid, N-Butoxymethylacrylamid, N-Isopropoxyethacrylamid, 2-Hydroxyethylacrylat und -methacrylat, 4-Hydroxybutylacrylat und -methacrylat, Hydroxypropylacrylat und -methacrylat einpolymerisiert.

Als Bestandteil, der in besonderer Weise die Haftung der Beschichtungsmasse auf dem vorbehandelten Formkörper verbessert, enthalten die Dispersionen etwa 0,1 bis 5, vorzugsweise 0,5 bis 3 Gew.-% einer wasserlöslichen Dihydrazin-Verbindung. Geeignete Dihydrazin-Verbindungen sind vor allem Dihydrazide aliphatischer 2 bis 10, insbesondere 4 bis 6 C-Atome enthaltender Dicarbonsäuren, wie Oxalsäuredihydrazid, Malonsäuredihydrazid, Bernsteinsäuredihydrazid, Glutarsäuredihydrazid, Adipinsäuredihydrazid, Sebazinsäuredihydrazid, Maleinsäuredihydrazid, Fumarsäuredihydrazid und/oder Itaconsäuredihydrazid. Geeignet sind ferner wasserlösliche aliphatische, 2 bis 4 C-Atome aufweisende Dihydrazide, wie Ethylen-1,2-dihydrazin, Propylen-1,3-dihydrazin und Butylen-1,4-dihydrazin.

Diese Dihydrazin-Verbindung kann prinzipiell als Haftvermittler in gelöster Form auch bereits vor der Polymerdispersion auf den durch Beflammen, elektrische Entladung oder Oxidation vorbehandelten Formkörper aufgetragen werden, technisch wesentlich vorteilhafter und deshalb zu bevorzugen ist aber die kombinierte Applikation der Dihydrazin-Verbindung gelöst in der wäßrigen Polymerdispersion.

Nach einem weiteren Merkmal der Erfindung kann das Copolymerisat in Form einer wäßrigen Polymerdispersion zusätzlich 0,2 bis 5, vorzugsweise 0,5 bis 3 Gew.-% Aldehyd- oder Ketogruppen aufweisende Monomere einpolymerisiert enthalten. Aldehyd- oder Ketogruppen aufweisende Monomere im Sinne der Erfindung sind Monomere mit mindestens einer Aldo- oder Keto-Gruppe und einer polymerisierbaren Doppelbindung. Von besonderem Interesse sind Acrolein, Diacetonacrylamid, Formylstyrol, Vinylalkylketone mit vorzugsweise 4 bis 7 C-Atomen, wie besonders Vinylmethylketon, Vinylethylketon und Vinylisobutylketon und/oder (Meth) acryloxy-alkylpropanale der allgemeinen Formel (I)

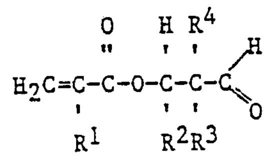

in der $R^1$ für —H oder —$CH_3$, $R^2$ für —H oder einen 1 bis 3 C-Atome enthaltenden Alkylrest, $R^3$ für einen 1 bis 3 C-Atome enthaltenden Alkylrest und $R^4$ für einen 1 bis 4 C-Atome enthaltenden Alkylrest stehen. Als Ketogruppen tragende Monomeren kommen ferner Diacetonacrylat, Acetonylacrylat, Diaceton (meth) acrylat, 2-Hydroxypropylacrylat-acetylacetat und Butandiol-1,4-acrylat-acetylacetat in Frage.

Der Einbau von Aldehyd- oder Ketogruppen-haltigen Monomeren in das Copolymerisat kann in Kombination mit Dihydrazin-Verbindungen zur Vernetzung der Beschichtungsmassen führen, wodurch die permeationsreduzierende Wirkung der Beschichtung noch verstärkt werden kann. Außerdem wird dadurch ihre mechanische Widerstandsfähigkeit verbessert.

Die Beschichtung der Formkörper mit der wäßrigen Polymerdispersion kann nach bekannten Verfahren wie Streichen, Spritzen, Gießen oder Tauchen erfolgen, wobei entsprechend der gewählten Methode die Verarbeitungseigenschaften der Dispersion, wie z. B. Fließverhalten und Benetzung, durch unterschiedliche Formulierung modifiziert werden können. Dabei werden Zusatzstoffe wie Verdickungsmittel, Stabilisatoren, Netzmittel, Hydrophobierungsmittel, Weichmacher, Filmbildehilfsmittel, Harze und Füllstoffe in unterschiedlicher Menge eingesetzt.

Sofort im Anschluß an das Auftragen der wäßrigen Beschichtungsformulierung muß die Trocknung erfolgen. Dabei müssen Temperaturen erreicht werden, die oberhalb der Mindestfilmbildetemperatur der Polymerdispersion liegen, um die Bildung einer homogenen, dichten und porenfreien Beschichtung zu gewährleisten.

Die auf diese Weise nachträglich gegen Permeation abgedichteten Hohlkörper sind schockzäh wie unbehandelte Hohlkörper und eignen sich insbesondere zur Aufbewahrung von Kohlenwasserstoffgemischen. Es wurde eine Permeationsverringerung von 50 bis 95 %, bezogen auf entsprechende unbehandelte Hohlkörper, gemessen.

## Patentansprüche

1. Verfahren zur Verringerung der Permeation von blasgeformten Hohlkörpern aus thermoplastischen Kunststoffen, insbesondere aus hochmolekularem HDPE, bei dem die Hohlkörperoberflächen mittels einer Gasflamme abgeflammt oder der Einwirkung einer elektrischen Entladung in einer gasförmigen Atmosphäre unterworfen und nachträglich in einem besonderen Arbeitsgang mit einer Beschichtungsmasse, die ein Copolymerisat aus 20 bis 80 Gew.-% Acrylnitril und 80 bis 20 Gew.-% anderen polymerisierbaren Monomeren enthält, überzogen werden, dadurch gekennzeichnet, daß in der Beschichtungsmasse das Copolymerisat in Form einer wäßrigen Polymerdispersion mit 0,1 bis 5 Gew.% einer wasserlöslichen Dihydrazin-Verbindung vorliegt, die anderen Monomeren Acryl- und/oder Methacrylsäureester von 1 bis 8 C-Atomen enthaltenden Alkanolen, Vinylester von 2 bis 4 C-Atomen enthaltenden

Carbonsäuren, Styrol und dessen alkylsubstituierte Derivate, Vinylchlorid und Vinylidenchlorid sind, und die Beschichtungsmasse durch Aufspritzen, Aufsprühen oder Tauchen aufgebracht wird und unmittelbar anschließend bei Temperaturen oberhalb der Mindestfilmbildetemperatur der Polymerdispersion getrocknet wird.

2. Verfahren nach Anspruch 1, dadurch gekennzeichnet, daß das Copolymerisat zusätzlich 0,2 bis 5 Gew.-% Aldehyd- oder Ketogruppen aufweisende Monomere einpolymerisiert enthält.

## Claims

1. A process for reducing the permeability of blow molded hollow articles made of thermoplastic resins, in particular of high molecular weight HDPE, where the surfaces of the hollow article are flashed off by means of a gas flame or subjected to the action of an electrical discharge in a gaseous atmosphere and subsequently coated, in a separate operation, with a coating composition containing a copolymer of about 20-80 % by weight of acrylonitrile and about 80-20 % by weight of other polymerizable monomers, wherein, in the coating composition, the copolymer is present in the form of an aqueous polymer dispersion of from 0.1 to 5 % by weight of a water soluble dihydrazine compound and the coating composition is applied by spraying, atomizing, dipping and the like and is dried immediately thereafter at temperatures above the minimum film forming temperature of the polymer dispersion.

2. A process as claimed in claim 1, wherein the copolymer additionally contains from 0.2 to 5 % by weight of carbonyl containing monomers in copolymerized form.

## Revendications

1. Procédé pour diminuer la perméation de corps creux formés par soufflage, en matières thermoplastiques, en particulier en HDPE à poids moléculaire élevé, selon lequel on flambe la surface du corps creux au moyen d'une flamme de gaz ou bien on la soumet à une décharge électrique dans une atmosphère gazeuse, puis, dans une étape de travail particulière, on la revêt d'une masse d'enduction qui contient un copolymérisat d'environ 20 à 80 % en poids d'acrylonitrile et environ 80 à 20 % en poids d'autres monomères polymérisables, caractérisé par le fait que, dans la masse d'enduction, le copolymérisat se trouve sous forme d'une dispersion de polymère aqueuse de 0,1 à 5 % en poids d'un dérivé de dihydrazine soluble dans l'eau et qu'on applique la masse d'enduction au pistolet, par pulvérisation, par trempage et séchage et que, directement après, on sèche à des températures supérieures à la température minimale de formation de pellicule de la dispersion de polymère.

2. Procédé selon la revendication 1, caractérisé par le fait que le copolymérisat contient, en outre, en polymérisation, 0,2 à 5 % en poids de monomères possédant des groupes carbonyle.